Europäisches Patentamt

(19) European Patent Office

Office européen des brevets

(11) Publication number: **0 369 695**
**A2**

## (12) EUROPEAN PATENT APPLICATION

(21) Application number: **89311659.0**

(22) Date of filing: **10.11.89**

(51) Int. Cl.5: **G06F 9/44**

(30) Priority: **11.11.88 GB 8826462**
**13.10.89 GB 8923103**

(43) Date of publication of application:
**23.05.90 Bulletin 90/21**

(84) Designated Contracting States:
**BE DE ES FR GB IT NL SE**

(71) Applicant: **Hawkins, David Charles**
**20 St.George's Road**
**Twickenham Middlesex TW1 1QR(GB)**

(72) Inventor: **Hawkins, David Charles**
**20 St.George's Road**
**Twickenham Middlesex TW1 1QR(GB)**

(74) Representative: **Powell, Stephen David et al**
**J.F. Williams & Co. 34 Tavistock Street**
**London WC2E 7PB(GB)**

(54) **Deductive computing machine.**

(57) A deductive computing machine (30) comprise means which represent the bound energy in time of compositions with a conjunction relationship and/or means which represent the free energy in time of compositions with an inclusive disjunction relationship, and/or means which represent the time of events with an implication relationship. The machine (30) comprises a logic amplifier (13) having an energy tree (14) and a first input arranged to receive premises. The output of the logic amplifier is supplied to a knowledge database (15) comprising an event log(16), a process list (17) and an energy database (18). The knowledge database is connected to an interpolator (19) comprising a functions database (20) and maths routines (21). The output of the interpolator (19) is connected to a second input of the logic amplifier and to a display driver (22) for a colour monitor (23).

## A Deductive Computing Machine

The present invention relates to a deductive computing machine and to a method employing such a machine.

The definitions of various terms appearing in this specification are given in the Glossary at the end of the description.

More particularly, the invention relates to a machine which utilises the truth functional connectives of deductive logic.

Existing computing devices use inductive methods which lead to relatively weak conclusions. One example is the expert system disclosed in GB2160684A.

According to a first aspect of the present invention there is provided a deductive computing machine characterised in that it comprises means which represent the bound energy in time of compositions with a conjunction relationship, and/or means which represent the free energy in time of compositions with an inclusive disjunction relationship, and/or means which represent the time of events with a causal implication relationship.

According to a second aspect of the present invention there is provided a method of calculating the truth value of a premise concerning the properties or attributes of objects, characterised in that it uses a machine in which truth functional connectives are used to directly represent relationships between physical objects, and in that it comprises the steps of making premises about fundamental properties of the objects, inputting said premises in the machine to generate further data about the fundamental properties of the objects and comparing the generated data with the premises to calculate the truth of the premises.

By using deductive arguments which employ causal implication (see Glossary), arrangements according to the present invention provide absolutely certain conclusions.

From the subset of possible statements which are affirmed as premises by the user, the machine preferably constructs a valid deductive argument and computes a model and displays a simulation of a physical system as a set of conclusions. The model is validated if the user infers that the conclusions are true of all the possible statements. The operative stages of the machine may be configured in hardware or software.

The present invention is based on the realisation that the truth-functional connectives of deductive logic can be used to symbolise the interactions of the three fundamental properties of matter, viz composition, energy and time.

The truth functional connective symbolising material implication, can be substituted for (i.e. is logically equivalent to) the time an event took place. By the principal of casualty, every effect has a cause so the conditional compound statement
Effect ⊃ Cause      (Statement A)
states that a cause is a necessary condition for an effect at a time symbolised by ⊃.

The truth functional connective symbolising inclusive disjunction (in the same notation above, written as v), can be substituted for (i.e. is logically equivalent to) the free-energy/time relationship between two compositions. The second statement
Composition 1 v Composition 2      (Statement B)
states that either composition 1 or composition 2 is true or both are true and there is a free-energy of their association which varies with time, symbolised by v.

The truth-functional connective symbolising the combining of two statements conjunctively (in the same notation as before, written as a dot .), can be substituted for (i.e. is logically equivalent to) the bound-energy/time relationship between two compositions. The compound statement:
Composition 1 . Composition 2      (Statement C)
thus states that composition 1 is true and composition 2 is true and there is a bound energy of the conjunction which varies with time, symbolised by ".".

Negation (written in the previous notation as a tilde ) has its conventional logical meaning when written in front of a simple statement of composition, i.e. :
~C means not C.

Any compound statement in the deductive computing machine which relates compositions, negated compositions, energy and time such as:
Av~A⊃A.~A      (Statement D)
is very significant.

Statement D asserts its is always true that a composition A has free energy with respect to its conjunct~A. (A. ~ A) is a logical contradiction however, and its connective cannot symbolise the bound energy of A with ~ A and cannot be the cause of A having free energy with respect to ~ A.

The deductive machine uses the extended meaning of the truth functional connectives ⊃ , . and v and of negation ~ when deducing the interaction of the three fundamental properties of matter i.e. composition, energy and time.

The deductive machine uses the conventional meanings of the truth functional connectives to deduce the truth of statements about the attributes of the three fundamental properties i.e. at any time t.
(x) [Cx ⊃ Vx]      (Statement E)
(x) [Cx ⊃ (∃y) (SUy = Cx∩~Cx)]      (Statement F)

(x) [SUx⊃ (∃y) (Ly = SUx∩~SUx)]    (Statement G)

(x) [Lx⊃ (∃y) (PTy = Lx∩~Lx)]    (Statement H)

where the propositions mean the following

E - Any composition (C) has a volume (V).

F - Any C has at least one surface SU, logically equivalent to the intersection of C and not-C.

G - Any SU has at least one line L, logically equivalent to the intersection of SU and SU.

H - Any L has at least one point logically equivalent to the intersection of L and L.

and where ∩ symbolises the intersection of two classes, and ∃ symbolises "at least one of".

Further:

(x) [Vx ⊃ SHx]    (Statement I)

(x) [SUx ⊃ Tx ]    (Statement J)

(x) [Lx ⊃ Dx ]    (Statement K)

(x) [PTx⊃ LOx]    (Statement L)

where the propositions mean the following

I - Any volume has a shape

J - Any surface has a texture

K - Any line has a direction

L - Any point has a location.

Scientific enquiry evaluates these attributes: the deductive computing machine determines their truth values by helping the user compute and compare its conclusions with what was asserted as premises from the input data.

A preferred embodiment of the present invention will now be described, by way of example only, with reference to the accompanying drawings of which:

Fig.1 shows a diagram illustrating the principle of operation of a deductive computing machine;

Figs 2a and 2b show a salt and sand system suitable for modelling in accordance with the present invention; and

Figs 3a and 3b show the process of the snapping of an iron bar suitable for modelling in accordance with the present invention.

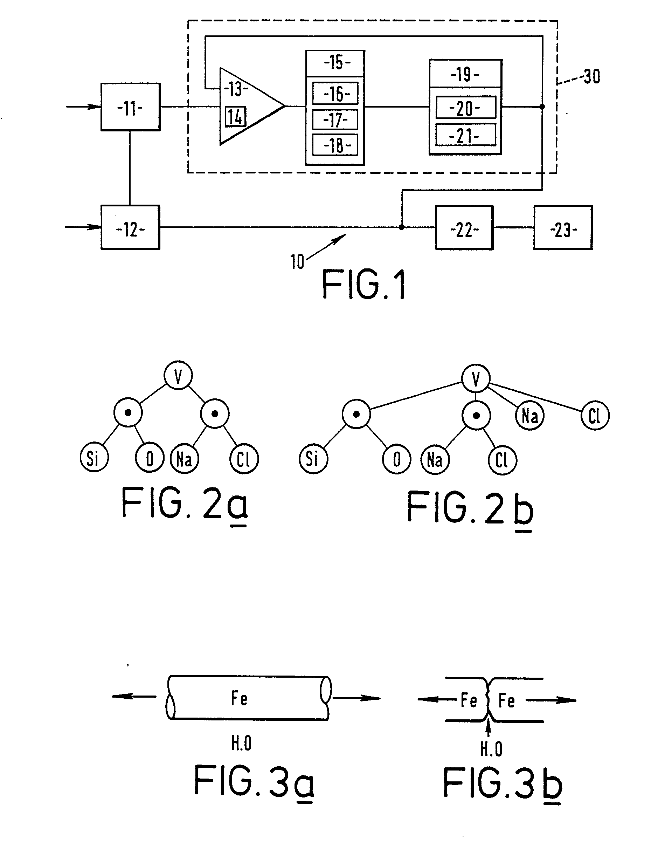

Referring to the drawings, Fig 1 shows a system 10 comprising a deductive computing machine 30. The system comprises user and data inputs 11,12 respectively. Input 11 is connected to the first input of a logic amplifier 13 of the machine 30. The amplifier is associated with an energy tree 14 (see glossary), and the output is supplied to an event log 16, a process list 17 and an energy database 18 all contained in a knowledge database 15. Database 15 models the physical system under consideration.

The output of knowledge database 15 is supplied to an interpolator 19 which contains an interpolator functions database 20 and maths routines 21 which allow a display driver 22 to produce usually on a colour monitor 23 a simulation of the model of the physical system in database 15. The output of interpolator 19 is also supplied to a second input of the logic amplifier 13.

Several data structures of the system will now be explained in greater detail.

## Energy Tree 14

The system that is being modelled is defined by energy, this definition being held in the energy tree. At any time it is possible to produce a statement that completely defines the structure of the tree.

Compositions, defined as energy in the form of matter particles, can store bound energy or share free energy with respect to each other through time. The former link is symbolised by an and-node within the tree, and the latter link is symbolised by an or-node within the tree.

A terminal node is always at the lowest level of the tree and symbolises the definition of the composition to the current level of knowledge within the computer system, e.g. a terminal level may be defined as being SALT. If the computer system has a definition for SALT, it can then further sub-divide it into SODIUM and CHLORINE. This would then form two terminal nodes corresponding to the computer system's current level of knowledge. This can also be split further into PROTONS, ELECTRONS and NEUTRONS if the system has knowledge of these items.

Associated with each terminal node is an integer which, at any time, represents the number of instances of the compositions. Each instance represents a point in the energy space.

Figure 2a shows a tree that defines a model completely made up of salt and sand, defined in terms of their chemical elements. The logical statement defining this tree is:

(Si . O) v (Na . C1)

Note that the salt and the sand are free with respect to each other in time, so that as time progresses, salt grains do not bind to sand grains.- (Notice that there is no water in this system, so it is completely dry.)

Within the salt molecules, however, the sodium and the chlorine are bound to each other and thus cannot mix with the silicon or the oxygen in the sand grains since these two are bound to each other. There is no energy input, such as heat, defined for this system, which may dissociate the salt or sand grains.

## Event Log 16

This resides within the knowledge database 15 and is produced as a result of performing a time simulation on the model. As the simulation is run through time, the energy tree may change its structure. When new nodes are created or removed. these are considered to be events. These events may involve the split, join or adoption of compositions, (see glossary).

Referring to the system of Figure 2a, if energy is fed into the system such that part of the salt bound energy composition undergoes a split then the system of Figure 2b will hold true. The sodium and the chlorine become free with respect to each other. This new system now has the logical description as shown below:

(Si . 0) v (Na . C1) v Na v C1

when described as an event it has the following form in logical terms:

Na v C1 ⊃ (Si . 0) v (Na . C1)

It is then entered in the event log by indexing into the energy tree and noting the new positions of created nodes, their origin node, and the changes in the number of instances of the points, and the time of each event. This will take the form of a linear array based linked-list.

## Process List 17

Whereas the event log is the output from running a simulation, the process list contains a specified set of processors, defined by the user, that are used to drive the simulation. These are expressed in the same terms as the data in the event log but have extra parameters added. Each process has a start time for the first event of a sequence, and extra process parameters that define the way in which the process affects the energy tree nodes, e.g. the rate at which energy is fed into a bound energy node. This data is held as a linear array-based linked-list.

## Energy Database 18

This set of data defines the necessary parameters of compositions that are needed for the computer system to successfully run a simulation. This data includes the spatial description of certain compositions, as well as the spatial description of energy functions, e.g. temperature gradients. This data is held as a linear array-based linked-list.

## Interpolation Functions Database 20

This contains a set of interpolation functions that are used by the maths routines functional block 21 to allow the display driver 22 to render the current model visually. Since the knowledge database 15 defines the model at specific points, this would be insufficient information to display a meaningful picture of the model. This database is held as a set of matrices.

## Maths Routines 21

This is strictly a functional block, but does contain implicit information about the mathematical operations that need to be added to control the interpolation functions. This is therefore a software block which contains implicit mathematical functions.

The system 10 is operated as follows. The user selects a sub-set of the data (from a physical system) which have been provided to data input 12. Together with the user's beliefs, the sub-set of data is entered from input 11 into the first input of logic amplifier 13. These inputs are in the form of compound statements of composition, which, when presented at logic amplifier 13 are made true of the structure of the energy tree 14.

The user then enters the relevant values of bound and free energies in time to the and/or-nodes of the energy tree 14 which are, in turn, indexed to the lists of the event log 16, the process list 17 and the energy database 18. The knowledge database 15 stores, for example, values of bound energy above which an event, such as a split, occurs corresponding to a change in the structure of the energy tree at a time to be recorded in the event log 16. The knowledge database 15 defines the energy tree in composition, energy, time and spatial attributes at particular points or sections and at a particular time as stated by the user.

The above parametric definitions are input to the interpolator 19 and a simulation of the model appears visually on monitor 23. The user compares the views of the model on the monitor 23 with the full data set from input 12. If the user's inference is that the simulated conclusions from the deductive computing machine are true of the data set, then the model is validated and the simulation's reliability is maximised. If the user recognises a conflict between the modelled and simulated data and the input data, then the knowledge database 15 must be updated or the input data modified until the user can accept that the conflict is removed.

A possible application of the deductive computing machine is to interpret the snapping of an iron bar in water see Figs 3a and b. The machine accepts statements about the chemical composition, i.e. Fe (iron), H.O (water or ice), and interprets the event (i.e. the snapping of the bar) as a logical statement that every effect implies a cause. The machine uses the implication connective to symbolise the time of the event, i.e. the crack starts when

H.O $\supset$ H.O v Fe

Another possible application of the deductive computing machine is in earthquake simulation. A user asserts a rock, composition R, which contains trace gases, composition G, as (R v G). The user then asserts a 4-D stress field in the space occupied by (R v G) by the declaration of a field variable V. If the local stress field at any point exceeds the fracture limit, an event occurs (G $\supset$ (R v G)) at a time symbolised by $\supset$ . Prior to a major earthquake, microfractures occur. If physicists know the theoretical value of V, the deductive computing machine can show the simulated fracture distribution consistent with the stress field asserted. Comparison of the simulated fractures (the consequences) with the observed fractures (the premises) will show if the deductive computing machine is well-calibrated with respect to the real-world rock formations. If well calibrated, the deductive computing machine representation can be used to simulate in a scale-independent manner the development of gross fractures over time. It can also be continuously tuned to match the observations. The deductive computing machine thus emulates reality and can be used predictively or diagnostically.

Further applications of the invention are in the fields of: factory integrated manufacture; meteorology; medical diagnostics; command, control, communication and intelligence in the defence sector; oil reservoir simulation and other geological applications; air traffic control; and process control, e.g. in nuclear power stations.

### GLOSSARY OF TERMS

### LOGIC

**Statement:** A declaration which is either true or false.

**Inference:** A process by which one statement is arrived at and affirmed on the basis of one or more statements accepted as the starting point of the process.

**Argument:** A group of statements of which one is claimed to follow from the others, which are regarded as providing support or grounds for the truth of that one.

**Premises:** Statements which are affirmed as providing support or reasons for accepting the conclusion of an argument.

**Conclusion:** Statement which is affirmed on the basis of the other statements (premises) of an argument.

**Proposition:** Practically synynomous with statement.

**Simple Statement:** A statement which does not contain any other statement as component.

**Compound Statement:** A statement which does contain another statement as component.

**Truth-Functional Connective:** Connects truth-functional component statements to form a truth-functional compound statement.

**Conjunction:** A compound statement formed with the truth- functional connective symbolised by a dot "." which represents the English word "and".

**Inclusive Disjunction:** A compound statement formed with the truth-functional connective symbolised by a "v", which represents the English word "or" when used to mean "either, possibly both" of the two disjunct statements are true.

**Implication:** A compound statement formed by the connection of two statements with the truth functional connective symbolised by a horseshoe " $\supset$ ", which represents the English words "If" placed before the first statement (the antecedent) and "then" placed between the antecedent and the second statement (the consequent).

**Causal Implication:** An implication (conditional) in which the consequent is regarded as following its antecedent from the laws of physics and not from logic or from definition.

**Validity:** An attribute only of a deductive argument when its conclusions have to be true if its premises are true. Inductive arguments only provide some support for their conclusions from their premises.

### PHYSICS

**Composition:** Energy in the form of matter particles.

**Bound Energy:** The energy stored in the bond between particular compositions, within a parent composition.

**Free Energy:** The energy shared between any compositions, within a parent composition.

**Join:** An event when free energy changes to bound energy between compositions.

**Split:** An event when bound energy changes to free energy between compositions.

**Adoption:** An event when a composition enters a parent composition.

### COMPUTING AND THE PRESENT INVENTION

**Model:** This is a general term to describe the computer system's internal representation of the system to be simulated. It includes all data structure associated with the representation of data.

**Energy Tree:** This is a data structure that contains a linked-list of 'nodes' organised in a hierarchical tree form. It symbolises the energy distribution in time of the physical system that is being modelled. It contains or-nodes, and-nodes and terminal modes.

**Terminal Node:** This is a node at the lowest level of the energy tree. It symbolises a statement of composition that is accurate to the level of knowledge held with the system about compositions.

**Or-Node:** This is an element of the energy tree that symbolises the free energy-time space occupied by their-node composition.
The or-node is symbolised in logic by "v".

**And Node:** This is an element of the energy tree that symbolises the bound energy-time space occupied by the and-node composition.
The and-node is symbolised in logic by "."

**Event Log:** This is a data structure which contains a log of events that occur as a simulation is run and describes the way the energy tree changes its structure with time.

**Event:** The effect of a change to the energy tree. Only three kinds of events can change the tree: joins, separations and adoptions of compositions.
The time of an event is symbolised by " ⊃".

**Process:** A continuous sequence of events.

## Claims

1. A deductive computing machine characterised in that it comprises means which represent the bound energy in time of compositions with a conjunction relationship and/or means which represent the free energy in time of compositions with an inclusive disjunction relationship, and/or means which represent the time of events with a causal implication relationship.

2. A machine according to Claim 1 which, from a subset of premises, constructs a valid deductive argument and computes a model and displays a simulation of a physical system as a set of conclusions.

3. A machine according to claim 1 or 2 comprising a logic amplifier (13) having a first input for receiving premises, the output of the logic amplifier being supplied to a knowledge database (15) connected to an interpolator (19), the output of the interpolator comprising the output of the machine and also being connected to a second input of the logic amplifier (13).

4. A machine according to claim 3 wherein the logic amplifier (13) is associated with an energy tree (14), and wherein the knowledge database (15) comprises an event log (16), a process list (17), and an energy database (18), and the interpolator (19) comprises a functions database (20) and maths routines (21).

5. A modelling system comprising a user input (11) associated with a data input (12), the user input being connected to the input of a machine (30) according to any preceding claim, the output of the machine being connected to display means (22,23).

6. A method of calculating the truth value of a premise concerning the properties or attributes of objects, characterised in that it uses a machine (30) in which truth functional connectives are used to directly represent relationships between physical objects, and in that it comprises the steps of making premises about fundamental properties of the objects, inputting said premises in the machine to generate further data about the fundamental properties of the objects and comparing the generated data with the premises to calculate the truth of the premises.

7. A method according to claim 6 wherein the machine (30) is as claimed in any of claims 1 to 5.

8. A method of deductive computation comprising one or more of the following steps:

(i) producing data concerning the composition or bound energy of a system from a conjunction relationship,

(ii) producing data concerning the free energy of a system from an inclusive disjunction relationship,

(iii) producing data concerning the time of events from an implication relationship.

9. A method of deriving information about attributes of an object or composition comprising one or more of the following steps:

(i) deriving information about a surface SU of the composition C, by examining the intersection of C and not-C;

(ii) deriving information about a line L of the composition C by examining the intersection of SU and not-SU;

(iii) deriving information about a point of the composition C by examining the intersection of L and not-L.

FIG.1

FIG. 2 a

FIG. 2 b

FIG.3a

FIG.3b